# EUROPEAN PATENT SPECIFICATION

(11) **EP 2 640 674 B1**
(45) Date of publication and mention of the grant of the patent: **29.10.2014**
(21) Application number: 11815808.8
(22) Date of filing: 10.11.2011
(51) Int. Cl.: B29C 67/20, C04B 28/14, C04B 38/00, C04B 20/10

(54) **MANNER OF OBTAINMENT OF MASS FOR PRODUCTION OF SHAPED CONSTRUCTION ELEMENTS AND MASS FOR PRODUCTION OF SHAPED CONSTRUCTION ELEMENTS**
VERFAHREN ZUR HERSTELLUNG VON GEFORMTEN BAUTEILEN ANHAND EINER FORMBAREN MASSE
PROCÉDÉ D'OBTENTION UNE MASSE POUR LA PRODUCTION D'ÉLÉMENTS DE CONSTRUCTION FORMÉS ET MASSE POUR LA PRODUCTION D'ÉLÉMENTS DE CONSTRUCTION FORMÉS

(30) Priority: 15.11.2010 PL 39296010 P
(43) Date of publication of application: 25.09.2013
(73) Proprietor: HCH Spó Ka Z.o.o., 04-041 Warszawa (PL)
(72) Inventor: HAINTZE, Jerzy, PL-04-619 Warszawa (PL); HAINTZE, Andrzej, PL-05-092 Lomianki (PL)
(74) Representative: Piotrowicz, Alicja
(86) International application number: PCT/PL2011/000116
(87) International publication number: WO 2012/067528

(56) References cited:
- EP-A2- 1 172 346
- CHEMICAL ABSTRACTS, vol. 98, no. 8, 21 February 1983 (1983-02-21), Columbus, Ohio, US; abstract no.: 59000b, "Inorganic lightweight material", page 296, XP188564 & JP 57 145063 A (NIPPON PETROCHEMICALS CO LTD) 7 September 1982 (1982-09-07) -& DATABASE WPI Week 198241 Thomson Scientific, London, GB; AN 1982-87248E XP002674188, -& JP 57 145063 A (NIPPON PETROCHEMICALS CO LTD) 7 September 1982 (1982-09-07)
- CHEMICAL ABSTRACTS, vol. 105, no. 8, 25 August 1986 (1986-08-25), Columbus, Ohio, US; abstract no.: 65390h, Horie M.: "Fiber-reinforced lightweight building materials", page 306, XP61482 & JP 61 031372 A (MATSUSHITA ELECTRIC WORKS LTD) 13 February 1986 (1986-02-13) -& DATABASE WPI Week 198613 Thomson Scientific, London, GB; AN 1986-084925 XP002674189, -& JP 61 031372 A (MATSUSHITA ELECTRIC WORKS LTD) 13 February 1986 (1986-02-13)
- CHEMICAL ABSTRACTS, vol. 89, no. 6, 7 August 1978 (1978-08-07), Columbus, Ohio, US; abstract no.: 48107e, Tabata, T.: "Lightweight inorganic panels", page 266, XP64352 & JP 52 140533 A (ISHIKAWA TAKASHI) 24 November 1977 (1977-11-24) -& DATABASE WPI Week 197802 Thomson Scientific, London, GB; AN 1978-03079A XP002674190, -& JP 52 140533 A (ISHIKAWA T) 24 November 1977 (1977-11-24)
- CHEMICAL ABSTRACTS, vol. 118, no. 8, 22 February 1993 (1993-02-22), Columbus, Ohio, US; abstract no.: 65652p, Sugiyama, Y.: "Water-containing granular aggregates and their manufacture", page 372, XP353365 & JP 4 254449 A (FUJIKAWA KENZAI KOGYO) 9 September 1992 (1992-09-09) -& DATABASE WPI Week 199243 Thomson Scientific, London, GB; AN 1992-352937 XP002674191, -& JP 4 254449 A (FUJIKAWA KENZAI KOGYO KK) 9 September 1992 (1992-09-09)

## Description

The subject matter of the invention comprises a method of obtaining a mass for the production of shaped construction elements and a mass for production of shaped construction elements, which are useful in the construction industry, in particular for the production of construction elements in module systems.

Polish patent application no. P-329 432 discloses a method of production, especially of a microporous concrete mass, which is useful for erecting concrete or reinforced concrete constructions.

The method according to application no. P-329 432 consists in dry mixing a powdered activator with powdered, finely ground waste glass, in the proportion of 1.5 to 2.5% activator and 97.5 to 98.5% glass dust. When the mixture obtains a uniform structure, it is poured in a thin layer on a belt conveyor moving inside the furnace, and then it is heated to the temperature of 750 to 950°C for a specified amount of time, and then rapidly cooled down. Before heating, the dust poured on the conveyor belt is grooved by creating narrow strips connected with a thin layer formed between the poured powder. During rapid cooling, the formed strips crack, forming small lumps of granulated glass. The size of the lumps can be freely shaped depending on the thickness of the formed strips, the cooling temperature, and the contents of the activator. The activator which allows for foaming the ground waste glass and producing such granulated glass is composed of 45 to 95 weight units of silicon carbide and 1 to 10 weight units of carbon, preferably in the form of soot, and 20 to 50 weight units of borax or 1 to 10 weight units of manganese oxide or 20 to 26 weight units of lead oxide together with 20 to 26 weight units of copper oxide.

The essence of the solution related to a method of obtaining a mass for the production of shaped construction elements consists in placing in a mechanical mixer a granulate, in the form of perlite, soaking it in water, until the granulate is completely soaked, and mixing with a binding agent, with plaster with improved parameters, until a state where each loose granulate grain is covered with a layer of moist binding agent, thus creating a coating around the grain. Prepared moulds are filled with the obtained mass, and the mass is then compressed until individual granulate grains are connected only with parts of their surface, leaving free spaces between the grains filled with air. Compression is applied until the shape of the construction element, corresponding to the mould, is retained.

The mass for the production of shaped construction elements, in accordance with the invention, consists of 15-25% by weight of perlite, 35-45% by weight of a binding agent, in the form of plaster with improved quality, and 35-45% by weight of water.

The solution according to the invention allows for the production of individual construction elements, with high precision and repeatability of the individual elements, constituting a system for the construction of foundations, walls, floors, and roofs of buildings. Owing to the spatial distribution of perlite grains, surrounded with the microscopic structure of a hardened binding agent in the mass for the production of elements, these elements exhibit a significant compressive strength simultaneously maintaining high thermal insulation properties, which is particularly valuable in structures of materials used in construction. Construction elements produced by the method and from the mass according to the invention are resistant to biological factors such as mildew, fungi, rodents, lichen.

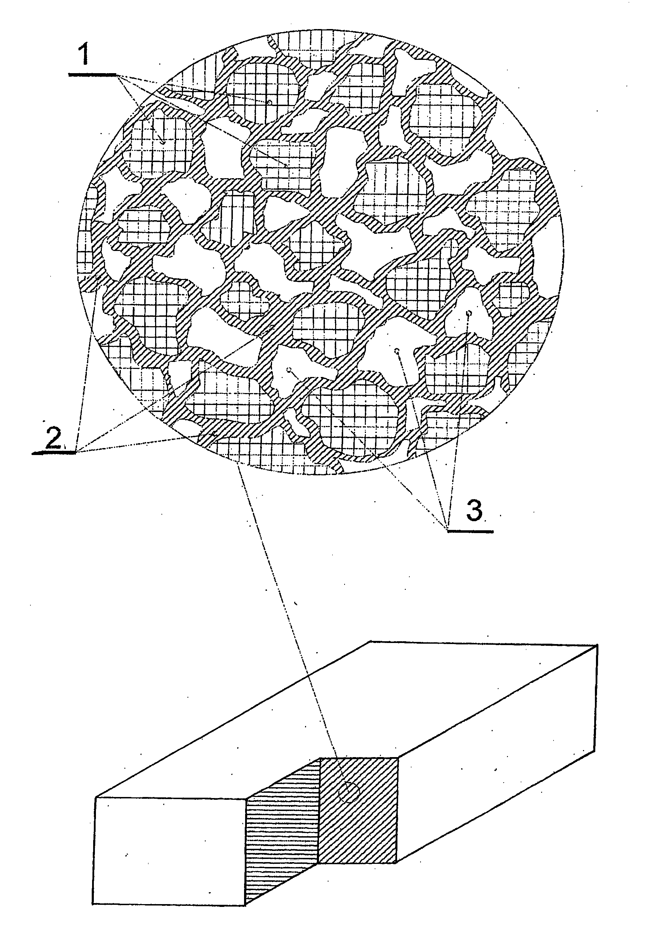

The subject matter of the invention has been explained in the attached drawing, illustrating a construction element with a detail showing the structure of a mass of which it was produced. Composition of the mass was presented in the example.

### Example:

In order to obtain 100 kg of the mass for the production of shaped construction elements according to the invention, the following need to be used:
- 18.0 kg of granulated perlite,
- 41.0 kg of a binding agent in the form of plaster with improved quality,
- 41.0 kg of water.

In a prepared mechanical mixer, 18 kg of the perlite is mixed with 41 kg of water until complete soaking of the perlite grains surface. Further, 41 kg of a binding agent in the form of plaster is added to the obtained mass and is mixed until obtaining a state where each loose perlite grain **1** is covered with a coating **2** of moist binding agent. When the mass becomes a collection of identically formed loose grains **1,** each coated with a layer **2** of moist binding agent, the prepared moulds are filled with it. The mass in the moulds is subjected to compression so that individual grains **1** only contact each other partially, leaving free spaces **3** between the coated grains **1**. Free spaces **3** are filled with air. By compressing, the shape of the construction element, corresponding to the shape of the mould, is retained. After forming, the ready elements are taken out of the mould and left until desired construction and resistance parameters are obtained.

## Claims

1. A method of obtaining a mass for the production of shaped construction elements, **characterized in that** a granulate,
in the form of perlite, is placed in a mechanical mixer and is soaked in water, until complete soaking of the granulate, and
is mixed with a binding agent in the form of plaster with improved quality, until obtaining a state where each loose grain **(1)** of the granulate is coated with a layer of moist binding agent, creating a coating **(2)** around the grain, after which the obtained mass is placed in prepared moulds and then it is compressed until the individual grains of the granulate are connected only with parts of their surface, so that there are free spaces **(3)** left between the grains, filled with air.

2. A mass for the production of shaped construction elements, **characterized in that** it consists of 15-25% by weight of perlite, 35-45 % by weight of a binding agent in the form of plaster with improved quality, and 35-45% by weight of water.

## Patentansprüche

1. Verfahren zur Erzeugung einer Masse für die Produktion von geformten Konstruktionselementen, **dadurch gekennzeichnet, dass** ein Granulat, in Form von Perlit, in einen mechanischen Mischer gegeben und in Wasser eingeweicht wird, bis das Granulat vollständig mit Wasser vollgesaugt ist, wonach es mit einem Bindemittel in Form von Gips mit erhöhter Qualität vermischt wird, bis ein Zustand erreicht wird, in dem jedes freie Korn **(1)** des Granulats mit einer Schicht aus Feuchtigkeitsbindemittel beschichtet ist, die eine Beschichtung **(2)** um das Korn bildet, wonach die erhaltene Masse in vorbereitete Formen gegeben und zusammengepresst wird, bis die einzelnen Körner des Granulats nur mit Teilen ihrer Oberfläche verbunden sind, sodass Freiräume **(3)** zwischen den Körnern entstehen, die mit Luft gefüllt sind.

2. Eine Masse für die Produktion von geformten Konstruktionselementen, **dadurch gekennzeichnet, dass** sie aus 15-25 Gew.-% Perlit, 35-45 Gew.-% Bindemittel in Form von Gips mit erhöhter Qualität und aus 35-45 Gew.-% Wasser besteht.

## Revendications

1. Procédé d'obtention d'une masse pour la production d'éléments structuraux formés, **caractérisé en ce qu'**un granulat, sous forme de perlite, est placé dans un mélangeur mécanique et est imbibé d'eau, jusqu'au trempage complet du granulé, et est mélangé avec un agent de liaison sous forme de plâtre d'une qualité améliorée, jusqu'à l'obtention d'un état, où chaque grain en vrac **(1)** du granulé est enrobé d'une couche humide d'agent de liaison, en créant un revêtement **(2)** autour du grain, ensuite, la masse obtenue est placée en moules préparés et est comprimée jusqu'à ce que les grains individuels du granulé soient reliés seulement par une partie de leur surface, de sorte qu'il y ait des espaces libres **(3)** entre les grains, remplis avec de l'air.

2. Une masse pour la production des éléments structuraux formés, **caractérisé en ce qu'**elle est constituée de 15-25% en poids de perlite, de 35-45% en poids d'un agent de liaison, sous forme de plâtre de qualité améliorée, et de 35-45% en poids d'eau.
